Europäisches Patentamt

European Patent Office

Office européen des brevets

(11) Veröffentlichungsnummer: **0 318 760**

**A2**

(12) **EUROPÄISCHE PATENTANMELDUNG**

(21) Anmeldenummer: 88119088.8

(22) Anmeldetag: **17.11.88**

(51) Int. Cl.⁴: **H04N 5/44**

(30) Priorität: **02.12.87 DE 3740782**

(43) Veröffentlichungstag der Anmeldung:
**07.06.89 Patentblatt 89/23**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Hentschel, Christian**
**Katharinenstrasse 5**
**D-3300 Braunschweig(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Fernsehempfänger mit einer Einrichtung zur Unterdrückung von Flimmerstörungen.**

(57) Bei einem Fernsehempfänger mit einer Einrichtung zur Unterdrückung von Flimmerstörungen im wiedergegebenen Fernsehbild, wobei die Vertikalfrequenz bei der Wiedergabe gegenüber der Vertikalfrequenz bei der Übertragung erhöht ist, erfolgt eine Umwandlung von übertragenen Videosignalen in wiederzugebende Videosignale mit erhöhter Vertikalfrequenz in Abhängigkeit vom Vorliegen von im wesentlichen horizontal verlaufenden Kanten nach einem ersten oder nach einem zweiten Verfahren. Dabei bevorzugt das erste Verfahren die Wiedergabe von Bewegungen und das zweite Verfahren die Wiedergabe von horizontal verlaufenden Kanten.

Fig. 5

EP 0 318 760 A2

## Fernsehempfänger mit einer Einrichtung zur Unterdruckung von Flimmerstörungen

Die Erfindung geht aus von einem Fernsehempfänger mit einer Einrichtung zur Unterdruckung von Flimmerstörungen nach der Gattung des Hauptanspruchs.

Die Qualität einer Fernsehübertragung wird wesentlich von Systemparametern, wie Bildfrequenz, Zeilenzahl und Signalbandbreite, beeinflußt. Dabei ist für eine flimmerfreie Wiedergabe sowie für eine Wiedergabe von Bewegungsvorgängen eine nicht zu niedrige Bildfrequenz erforderlich, während im Interesse einer möglichst hohen Auflösung eine möglichst hohe Zeilenzahl erforderlich ist. Beide Forderungen zielen auf eine hohe Bandbreite ab.

Bei der Festlegung der heute üblichen Fernsehsysteme wurden Kompromisse zwischen einem durch die damals gegebenen technischen Möglichkeiten bedingten Aufwand und einer möglichst hohen Bildqualität geschlossen. Eine Qualitätsverbesserung wird dabei durch das sogenannte Zeilensprung-Verfahren erreicht, bei welchem jeweils ein aus einer ungeraden Anzahl von Zeilen bestehendes Fernsehbild (Vollbild) aus zwei ineinander verschachtelten Teilbildern besteht. Bei einem genügend großen Betrachtungsabstand unterscheidet das Auge nicht die beiden Teilbilder voneinander, so daß bezüglich des Flimmerns von einer doppelt so großen Bildwiederholfrequenz ausgegangen werden kann. Bei dem europäischen Fernsehsystem wird damit nicht die Bildwiederholfrequenz von 25 Hz, sondern die Teilbildfrequenz von 50 Hz bezüglich des Flimmerns wirksam, welche jedoch nicht hoch genug ist, um auch bei großen hellen Flächen Flimmern zu vermeiden.

Die Annahme, daß die Teilbildfrequenz für das Flimmern maßgebend ist, gilt jedoch nur unter bestimmten Voraussetzungen. Insbesondere gilt sie dann nicht, wenn Strukturen der zu übertragenden Vorlagen in der Größenordnung einer Zeilenbreite liegen oder einen kontrastreichen Übergang in vertikaler Richtung bilden. So wird beispielsweise eine horizontal verlaufende Kante, sofern sie einen genügend scharfen Helligkeitsübergang darstellt, bei der von oben nach unten fortschreitenden zeilenweisen Abtastung von einer Zeile eines ersten Teilbildes nicht erfaßt, dann von der zeitlich darauffolgenden Zeile des gleichen Teilbildes erfaßt und bei der Abtastung des nächsten Teilbildes von der zwischen beiden Zeilen liegenden Zeile des nächsten Teilbildes ebenfalls erfaßt. Da die einzelnen Zeilen nur mit einer Folgefrequenz von 25 Hz abgetastet, übertragen und wiedergegeben werden, scheint die Kante im 25 Hz-Rhythmus um eine Zeilenbreite auf- und abzuspringen. Dieses sogenannte Kantenflackern kann bei entsprechenden Vorlagen äußerst störend in Erscheinung treten.

Sowohl zur Vermeidung der großflächigen Flimmerstörungen als auch zur Verringerung des Kantenflackerns sind Maßnahmen bekannt geworden. Dabei wird die Teilbildfrequenz bzw. Vertikalfrequenz heraufgesetzt, so daß das Flimmern großer heller Flächen vermieden wird. Bei der Heraufsetzung der Vertikalfrequenz ist jedoch ein Wiederholen der ursprünglichen Teilbilder bzw. ein Zusammensetzen der neuen Teilbilder aus den ursprünglichen Teilbildern erforderlich, wozu verschiedene Verfahren bekannt sind. Dabei ermöglichen diese bekannten Verfahren eine Verbesserung des Flimmerns bzw. Flackerns nicht gleichermaßen für alle verschiedenen Bildvorlagen. So macht sich beispielsweise eine Wiederholung von Vollbildern zum Zwecke der Erhöhung der Teilbildfrequenz auf die Wiedergabe von Bewegungsabläufen störend bemerkbar. Zur Vermeidung dieses Nachteils sind beispielsweise durch DE-A1 32 03 978 und DE-A1 34 42 890 Anordnungen zur Bildflimmerkorrektur bekannt geworden, bei welchen mit Hilfe eines Bewegungsdetektors eine Umschaltung zwischen verschiedenen Korrekturen erfolgt. Ein Bewegungsdetektor benötigt jedoch mindestens einen Teilbildspeicher und bedeutet daher zusätzlichen Aufwand.

Es ist ferner ein Verfahren und eine Schaltungsanordnung zur flimmerfreien Wiedergabe eines Videosignals (DE-A1 36 10 715) bekannt geworden, bei welchem aus dem Videosignal ein abgeleitetes Videosignal gebildet wird, bei dem die Teilbildfrequenz und die Vollbildfrequenz jeweils um einen Faktor gegenüber denjenigen des Videosignals vergrößert sind und die Teilbilder des abgeleiteten Videosignals durch Zeitkompression sequentiell aus jeweils einem Teilbild des Videosignals mit gleicher Rasterlage und durch nichtlineare Mischung aus mehreren aufeinanderfolgenden Teilbildern des Videosignals gebildet werden. Obwohl dieses Verfahren außer der flimmerfreien Wiedergabe auch eine Vermeidung des Kantenflakkerns ermöglicht, können bei sehr schnellen Bewegungsabläufen Bildstörungen auftreten.

Der vorliegenden Erfindung liegt die Aufgabe zugrunde, einen Fernsehempfänger mit einer Einrichtung zur Unterdrückung von Flimmerstörungen im wiedergegebenen Fernsehbild anzugeben, bei welchem neben der Unterdrückung von Flimmerstörungen eine gute Wiedergabe von Bewegungsabläufen erfolgt und ein Kantenflackern weitgehend vermieden wird.

Der erfindungsgemäße Fernsehempfänger mit den kennzeichnenden Merkmalen des Hauptanspruchs hat den Vorteil, daß eine Unterdrückung von Flimmerstörungen bei gleichzeitiger guter Wiedergabe von Bewegungsabläufen und der Vermeidung von Kantenflackern mit möglichst geringem technischen Aufwand möglich ist.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1 eine schematische Darstellung der Gewinnung von Videosignalen mit erhöhter Vertikalfrequenz bei einem ersten Ausführungsbeispiel, bei welchem die Videosignale mit erhöhter Vertikalfrequenz ein fortlaufendes Raster ohne Zwischenzeile bilden,

Fig. 2 eine weitere schematische Darstellung zur Ableitung der Signale mit erhöhter Zeilenfrequenz mit fortlaufendem Zeilenraster bei dem ersten Ausführungsbeispiel,

Fig. 3 eine schematische Darstellung der Ableitung von Videosignalen für eine gute Wiedergabe horizontaler Kanten bei dem ersten Ausführungsbeispiel mit fortlaufendem Zeilenraster,

Fig. 4 eine schematische Gegenüberstellung der entsprechend den Darstellungen nach Fig. 2 und 3 abgeleiteten Signale,

Fig. 5 ein Blockschaltbild des ersten Ausführungsbeispiels,

Fig. 6 eine schematische Darstellung der Ableitung von Videosignalen mit erhöhter Vertikalfrequenz nach dem Zeilensprung-Verfahren für eine gute Bewegungswiedergabe bei einem zweiten Ausführungsbeispiel,

Fig. 7 die Erzeugung von Videosignalen erhöhter Vertikalfrequenz für gute Kantenwiedergabe bei dem zweiten Ausführungsbeispiel,

Fig. 8 eine Gegenüberstellung der entsprechend den schematischen Darstellungen nach den Figuren 6 und 7 erzeugten Signale,

Fig. 9 ein Blockschaltbild des zweiten Ausführungsbeispiels,

Fig. 10 eine schematische Darstellung der Ableitung von Videosignalen mit erhöhter Vertikalfrequenz nach dem Zeilensprung-Verfahren für gute Kantenwiedergabe nach einem dritten Ausführungsbeispiel,

Fig. 11 eine Gegenüberstellung der entsprechend den schematischen Darstellungen nach den Figuren 6 und 10 abgeleiteten Signale,

Fig. 12 ein Blockschaltbild des dritten Ausführungsbeispiels,

Fig. 13 ein Ausführungsbeispiel eines Zeilenkompressors,

Fig. 14 und Fig. 15 je ein Ausführungsbeispiel für einen Kantendetektor,

Fig. 16 ein Blockschaltbild eines vierten Ausführungsbeispiels mit zwei Kantendetektoren und

Fig. 17 ein Blockschaltbild eines fünften Ausführungsbeispiels mit einem Kantendetektor und einem Bewegungsdetektor.

Gleiche Teile sind in den Figuren mit gleichen Bezugszeichen versehen.

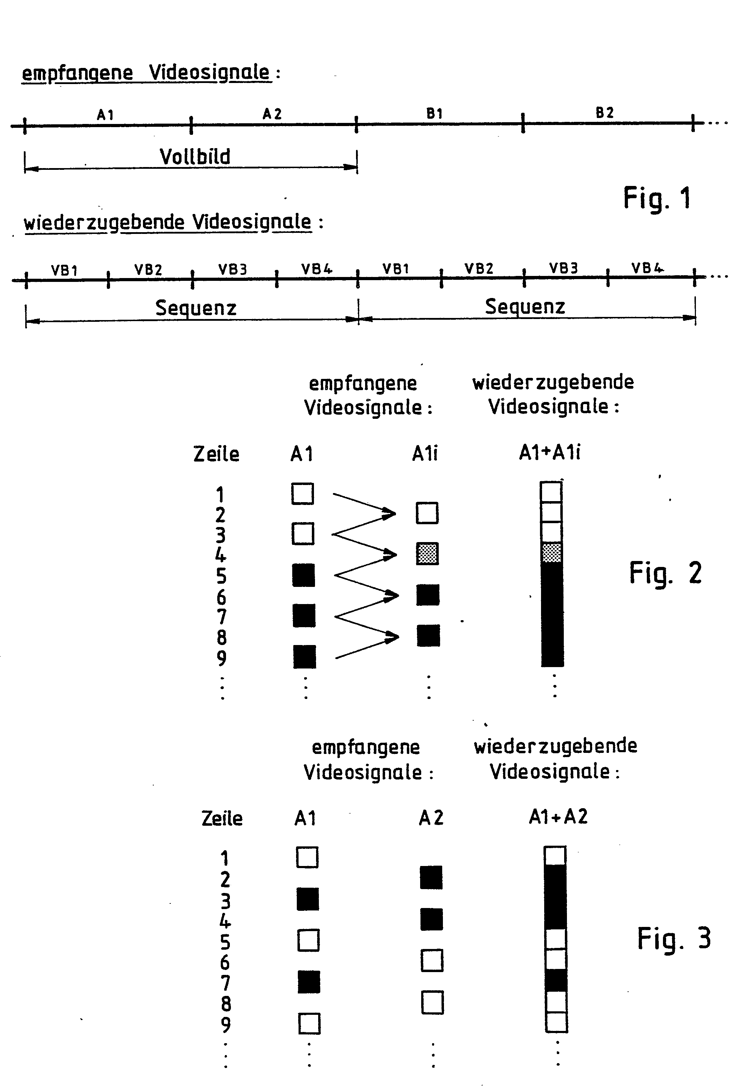

Die obere Zeile der Fig. 1 zeigt die zeitliche Abfolge zweier Vollbilder üblicher Videosignale nach dem Zeilensprung-Verfahren. Dabei besteht jedes der Vollbilder aus einem Teilbild A1 und A2 bzw. B1 und B2. Bei Videosignalen nach der europäischen 625-Zeilen-Norm beträgt die Dauer eines Teilbildes 20 ms. Aus den in der oberen Zeile schematisch dargestellten Signalen werden Signale mit doppelter Vertikalfrequenz ohne Zeilensprung umgeformt. Es ergeben sich dadurch zwei Vollbilder innerhalb einer Teilbildperiode bzw. Vertikalperiode der empfangenen Signale. Die Vollbilder VB1 und VB2 werden dabei jeweils aus dem Inhalt des Teilbildes A1 abgeleitet, während die Vollbilder VB3 und VB4 jeweils aus dem Inhalt des zweiten Teilbildes A2 gewonnen werden. Dabei ergibt sich eine gute Bewegungswiedergabe, da keine zeitliche Verschachtelung der empfangenen Signale erfolgt. Um zu einer fortlaufenden Abtastung ohne Zeilensprung zu kommen, werden die Zeilen der Vollbilder VB1 und VB2 durch Interpolation in vertikaler Richtung gewonnen. Dieses kann beispielsweise in einfacher Form durch eine Wiederholung der Zeilen oder durch eine Mittelung der Signale benachbarter Zeilen geschehen.

Dieses ist in Fig. 2 für einige Zeilen schematisch dargestellt, wobei die Zeilen 1 und 3 des Teilbildes A1 und damit auch des Vollbildes VB1 einen weißen Bildinhalt und die Zeilen 5, 7 und 9 einen schwarzen Bildinhalt aufweisen. Die geradzahligen Zeilen der Vollbilder VB1 und VB2 (Fig. 1) werden durch Interpolation jeweils zweier zeitlich aufeinanderfolgender Zeilen des ersten Teilbildes A1 der empfangenen Signale gewonnen. Dabei erhält die Zeile 2 eine der Helligkeit weiß entsprechende Amplitude, die Zeilen 6 und 8 stellen schwarz dar, während die Helligkeit, welche durch die Zeile 4 wiedergegeben wird, einem mittleren Wert entspricht. In der rechten Spalte der Fig. 2 sind die entsprechenden Zeilen der Vollbilder VB1 und VB2 untereinander dargestellt, dabei bedeutet die angegebene Formel A1 + A1i keine mathematische Addition, sondern die Gewinnung der ungeradzahligen Zeilen aus dem ersten Teilbild A1 und die Gewinnung der geradzahligen Zeilen durch Interpolation der Signale benachbarter Zeilen des Teilbildes A1.

Fig. 3 zeigt die Ableitung der wiederzugebenden Signale, wenn durch einen Kantendetektor eine horizontal verlaufende Kante angezeigt wird. Bei der Darstellung nach Fig. 3 ist ein gegenüber der Darstellung nach Fig. 2 unterschiedlicher Bildinhalt als Beispiel angegeben. Dabei werden die Vollbilder VB2 und VB3 aus den Teilbildern A1 und A2 der empfangenen Signale gewonnen. Die Zeilen eines jeden Teilbildes A1 bzw. A2 stellen die gleichlautend numerierten Zeilen des Vollbildes VB2 bzw. VB3 dar. Der gesamte Inhalt eines Vollbildes der empfangenen Signale wird also innerhalb eines Vollbildes der wiederzugebenden Signale auf den Bildschirm geschrieben.

Während beispielsweise die Zeile 5 bei einer direkten Wiedergabe der empfangenen Signale nur einmal während eines jeden Vollbildes, also alle 40 ms geschrieben wird - die entsprechende Stelle des Bildschirms also nur alle 40 ms aufgehellt wird - erfolgt bei der Ableitung der Videosignale mit erhöh ter Vertikalfrequenz gemäß Fig. 3 ein Aufleuchten im Abstand von 10 ms, wodurch ein Kantenflackern vermieden wird. Es kann allerdings bei bewegten Bildvorlagen bei der Ableitung nach Fig. 3 dadurch zu einer gestörten Wiedergabe des Bewegungsablaufes kommen, daß die Wiedergabe der einzelnen Signale zeitlich ineinander verschachtelt ist. So wird beispielsweise während des Vollbildes VB2 bereits der Inhalt des nach dem Teilbild A1 aufgenommenen Teilbildes A2 wiedergegeben. Danach wird im Vollbild VB3 noch einmal der Inhalt des Teilbildes A1 wiedergegeben. Gemäß der Erfindung wird jedoch nur bei Vorliegen von Kanten in eine die Darstellung von Kanten bevorzugende Ableitung der wiederzugebenden Videosignale umgeschaltet.

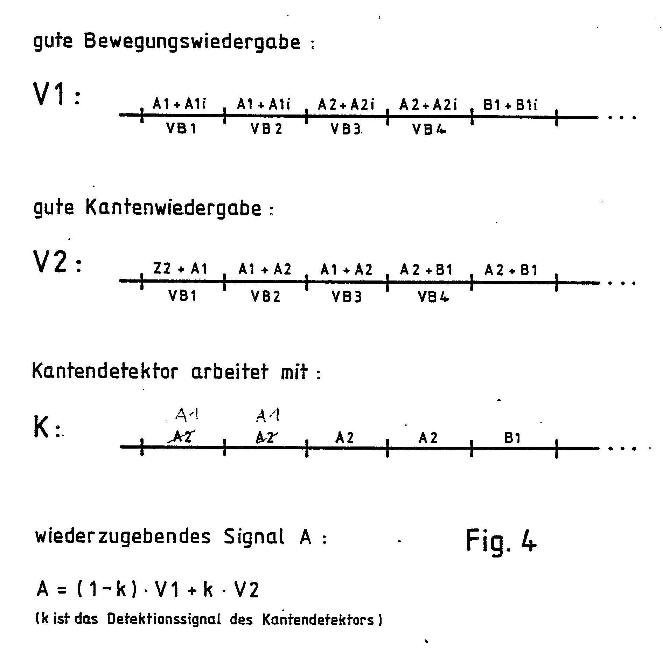

Fig. 4 stellt die beiden Verfahren zur Ableitung der wiederzugebenden Videosignale V1 und V2 einander gegenüber. Die Videosignale V1 bedeuten eine gute Bewegungswiedergabe, während eine gute Kantenwiedergabe mit den Videosignalen V2 erzielt wird. Dabei bedeutet Z2 das zweite Halbbild des dem Vollbild A1/A2 vorangegangenen Vollbildes. In der mit K bezeichneten Zeile der Fig. 4 sind diejenigen Teilbilder angegeben, deren Videosignale dem Kantendetektor jeweils zugeführt werden. Je nach Vorliegen der Kanten wird eines der Videosignale V1 oder V2 dem Ausgang der Einrichtung zur Unterdrückung von Flimmerstörungen zugeführt. Dazu wird vom Kantendetektor eine Überblendschaltung angesteuert, deren Ausgangssignal sich aus $A = (1-k) \cdot V1 + k \cdot V2$ ergibt, wobei k das Ausgangssignal des Kantendetektors ist.

Wie ferner aus Fig. 4 ersichtlich ist, benötigt der Kantendetektor nur Videosignale nach dem Zeilensprung-Verfahren, obwohl zur Wiedergabe Videosignale ohne Zeilensprung erzeugt werden. Der Kantendetektor braucht daher nicht auf die Verarbeitung so hoher Frequenzen eingerichtet zu sein, wie es bei Signalen ohne Zeilensprung erforderlich wäre.

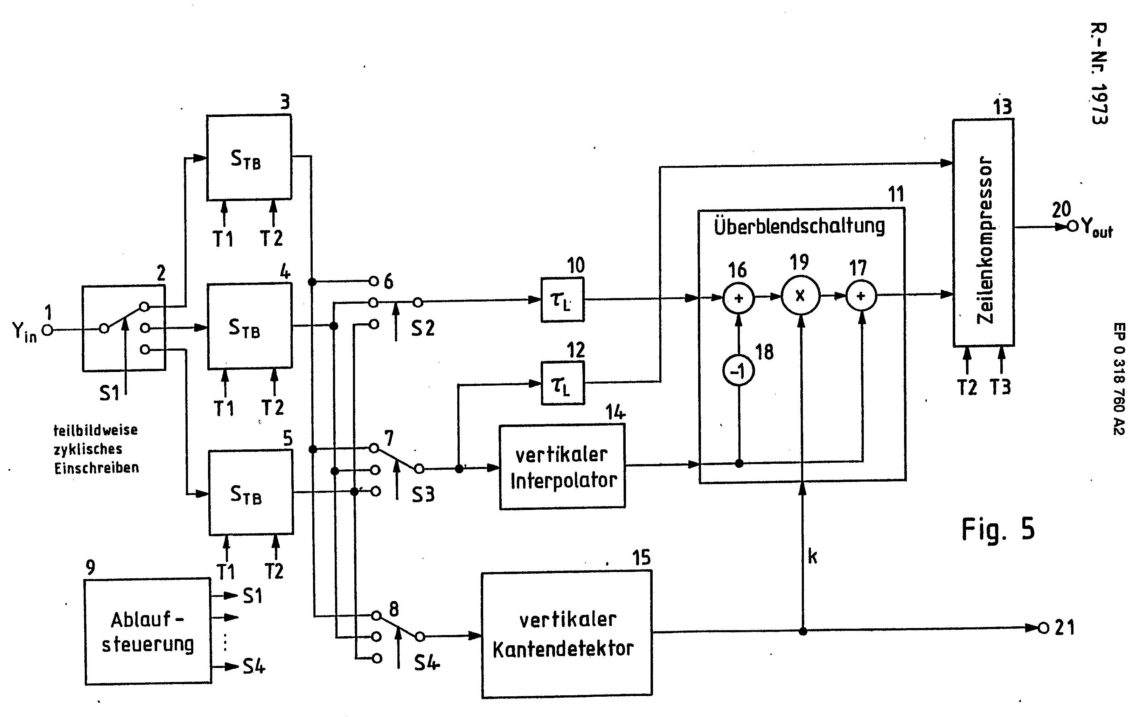

Fig. 5 zeigt ein Blockschaltbild eines ersten Ausführungsbeispiels, bei welchem die Videosignale, wie in den Figuren 1 bis 4 schematisch dargestellt, verarbeitet werden. Vor dem Eingehen auf Einzelheiten des Blockschaltbildes sei erwähnt, daß die Erfindung sowohl für Schwarz/Weiß- als auch Farbfernsehsignale anwendbar ist. Es kann dabei ein multiplexes Farbfernsehsignal verarbeitet werden oder die Chrominanz- und die Luminanzinformation in grundsätzlich gleichwirkenden Einrichtungen parallel verarbeitet werden. Je nach verwendetem Farbfernsehsystem ist die vertikale Interpolation entsprechend anzupassen. Auch die Steuerung der Chrominanzverarbeitung durch einen Kantendetektor, der nur die Luminanzsignale auswertet, ist denkbar.

Das Blockschaltbild nach Fig. 5 ist beispielhaft für ein Luminanzsignal Y vorgesehen, welches als Signal Yin dem Eingang 1 der Schaltungsanordnung nach Fig. 5 zugeführt wird. Über einen Umschalter 2 sind Eingänge von drei Teilbildspeichern 3, 4, 5 an den Eingang 1 in zyklischer Folge anschließbar. Vorzugsweise wird die Schaltungsanordnung nach Fig. 5 in digitaler Technik ausgeführt, wozu das Signal Yin ebenfalls als digitales Signal zugeführt wird. Bei der Verwendung üblicher digitaler Schaltungsbausteine kann der Umschalter 2 an sich entfallen und durch entsprechende Steuerung der Eingänge der Teilbildspeicher 3, 4, 5 ersetzt werden (write enable). Das Einschreiben der Videosignale in die Teilbildspeicher 3, 4, 5 erfolgt mit Hilfe eines Taktsignals T1, dessen Frequenz halb so groß ist wie die Frequenz des Taktsignals T2, das zum Auslesen der Signale dient. Dadurch werden die ausgelesenen Signale um den Faktor 2 zeitkomprimiert.

Die Verwendung von drei Teilbildspeichern ermöglicht eine relativ einfache Ablaufsteuerung und einen verhältnismäßig einfachen Aufbau der Speicher. Grundsätzlich kann jedoch die Funktion der Teilbildspeicher 3, 4, 5 auch von zwei Teilbildspeichern erfüllt werden.

Die Ausgange der Teilbildspeicher 3, 4, 5 sind mit je einem Eingang dreier Multiplexerschaltungen 6, 7, 8 verbunden, welche jeweils eines der Ausgangssignale der Teilbildspeicher 3, 4, 5 weiterleiten. Die Steuerung der Multiplexerschaltungen 6, 7, 8 erfolgt nach den in den Figuren 2 bis 4 angegebenen Schemata. Dazu werden entsprechende Steuersignale S2 bis S4 von einer Ablaufsteuerung 9 erzeugt.

Das Ausgängssignal der Multiplexerschaltung 6 wird über eine Verzögerungsschaltung 10 einem ersten Eingang einer Überblendschaltung 11 zugeführt. Das Ausgangssignal der Multiplexerschaltung 7 wird einerseits über eine weitere Verzögerungsschaltung 12 einem ersten Eingang eines Zeilenkompressors 13 und andererseits über einen vertikalen Interpolator 14 dem anderen Eingang der Überblendschaltung 11 zugeführt. Vertikale Interpolatoren sind an sich bekannt und brauchen im Zusammenhang mit der vorliegenden Erfindung nicht näher erläutert zu werden. Sie enthalten im wesentlichen Zeilen-Verzögerungsschaltungen und eine Schaltung zur Bildung eines Mittelwertes.

Der Ausgang der Multiplexerschaltung 8 ist mit dem Eingang eines Kantendetektors 15 verbunden, in welchem in an sich bekannter Weise Signale zweier oder mehrerer aufeinanderfolgender Zeilen miteinander verglichen werden. Eine Abweichung dieser Signale voneinander wird als Kante gewertet, worauf das Ausgangssignal des vertikalen Kantendetektors 15 einen Wert bis $k = 1$ annimmt. Liegt keine Kante vor, so ist $k = 0$. Im einfachsten Fall, wenn nur zwei Zustände ermittelt werden ($k = 1$ oder $k = 0$), kann die Überblendschaltung durch einen Umschalter ersetzt werden.

Das Signal k wird einem Steuereingang der Überblendschaltung 11 zugeführt. Diese enthält zwei Addierschaltungen 16, 17, eine Invertierschaltung 18 sowie eine Multiplizierschaltung 19 und gibt ein Ausgangssignal nach der in Fig. 2 dargestellten Gleichung an einen weiteren Eingang des Zeilenkompressors 13 ab. Am Ausgang 20 des Zeilenkompressors ist das wiederzugebende Luminanzsignal Yout mit erhöhter Vertikalfrequenz und erhöhter Zeilenfrequenz abnehmbar.

Beim Vorliegen einer Kante ($k = 1$) wird das Ausgangssignal der Verzögerungsschaltung 10 durch die Überblendschaltung 11 zu dem einen Eingang des Zeilenkompressors 13 geleitet. In der Addierschaltung 16 wird zwar das Ausgangssignal des vertikalen Interpolators 14 abgezogen, es wird jedoch nach der Multiplikation mit $k = 1$ wieder hinzuaddiert. Dem anderen Eingang des Zeilenkompressors 13 wird das Ausgangssignal der Verzögerungsschaltung 12 zugeführt. Durch eine entsprechende Steuerung der Multiplexerschaltungen 6 und 7 werden somit dem Zeilenkompressor Signale aus zwei aufeinanderfolgenden Halbbildern (beispielsweise A1 und A2) gemäß Fig. 4, Zeile V2 zugeführt.

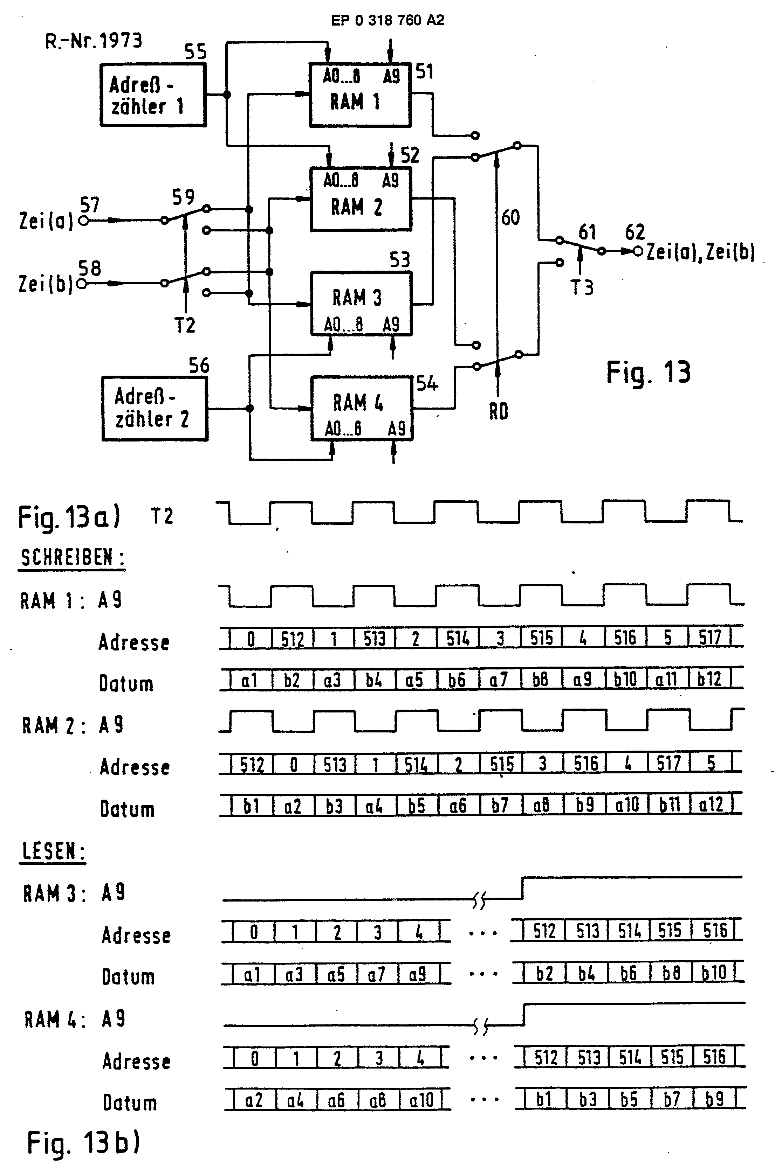

Da ein Vollbild der wiederzugebenden Videosignale (beispielsweise VB1) lediglich die halbe Zeit wie ein Teilbild der empfangenen Videosignale einnimmt, jedoch doppelt so viele Zeilen aufweist, ist insgesamt eine Komprimierung der Zeilenperiode um den Faktor 4 erforderlich. Durch das Auslesen aus den Teilbildspeichern 3, 4, 5 wurde lediglich eine Kompression der Zeilen um den Faktor 2 erreicht. Deshalb wird im Zeilenkompressor eine weitere Kompression um den Faktor 2 vorgenommen. Ein Ausführungsbeispiel für einen Zeilenkompressor ist im Zusammenhang mit Fig. 13 beschrieben.

Liegt keine Kante vor, so ist $k = 0$. Dann wird das Ausgangssignal des vertikalen Interpolators 14 von der Überblendschaltung 11 dem Zeilenkompressor zugeführt, so daß die in Fig. 4 in Zeile V1 dargestellte Folge von Signalen nach entsprechender Zeilenkompression über den Ausgang 20 abgegeben wird.

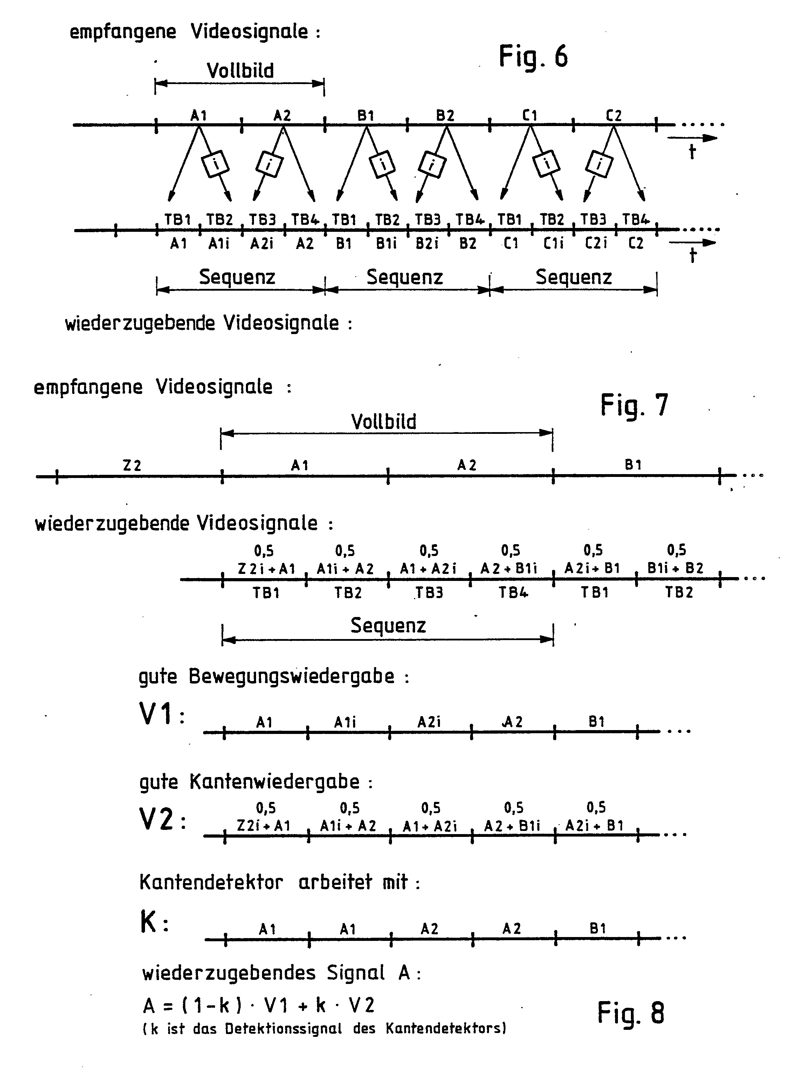

Bei dem im folgenden anhand der Figuren 6 bis 9 erläuterten zweiten Ausführungsbeispiel wird bei den Videosignalen mit erhöhter Vertikalfrequenz ein Raster nach dem Zwischenzeilenverfahren angewendet. Dabei ist die Teilbildfrequenz der wiederzugebenden Videosignale doppelt so groß wie die Teilbildfrequenz der empfangenen Videosignale. Gemäß Fig. 6 wird bei einer Sequenz von 4 Teilbildern TB1 bis TB4 das erste Teilbild TB1 direkt aus dem ersten Teilbild der empfangenen Videosignale abgeleitet. Das zweite Teilbild TB2 wird ebenfalls aus dem ersten Teilbild A1 der empfangenen Videosignale abgeleitet, wobei wegen des vertikalen Versatzes der Teilbilder eine zeilenweise Interpolation erfolgt. Das dritte Teilbild TB3 wird durch zeilenweise Interpolation aus dem zweiten Teilbild A2 der empfangenen Videosignale und das vierte Teilbild TB4 direkt aus dem zweiten Teilbild A2 der empfangenen Videosignale abgeleitet. Diese Sequenz wiederholt sich von Vollbild zu Vollbild der empfangenen Videosignale. Die somit erhaltenen Signale eignen sich für eine flimmerfreie Darstellung, wobei kaum Störungen bei der Wiedergabe von Bewegungsabläufen stattfinden, da keine zeitliche Verschachtelung bzw. Vertauschung der aufgenommenen Signale bei der Wiedergabe stattfindet.

Zur Erzielung einer guten Wiedergabe horizontal verlaufender Kanten wird gemäß Fig. 7 jeweils ein Teilbild der wiederzugebenden Videosignale aus zwei aufeinanderfolgenden Teilbildern der empfangenen Videosignale gewonnen. Dazu werden jeweils diejenigen Zeilen direkt aus einem der verwendeten Teilbildern A1 bzw. A2 verwendet, welche bezüglich ihrer vertikalen Lage dem jeweils zu erzeugenden Teilbild entsprechen. Aus dem anderen zur Zusammensetzung des Teilbildes der wiederzugebenden Videosignale verwendeten Teilbild werden Signale durch Interpolation zweier aufeinanderfolgender Zeilen gewonnen. Zwischen beiden Signalen wird anschließend durch Addition und Multiplikation mit dem Faktor 0,5 interpoliert. Es findet somit eine zeitliche und vertikale Interpolation statt.

Die nach beiden Verfahren abgeleiteten Videosignale V1 und V2 sind in Fig. 8 gegenübergestellt. Zusätzlich ist in Zeile K der Fig. 8 dargestellt, welches der Teilbilder dem Kantendetektor zugeführt wird. Eine Überblendung zwischen den Signalen V1 und V2 erfolgt nach der bereits im Zusammenhang mit Fig. 4 dargestellten Funktion.

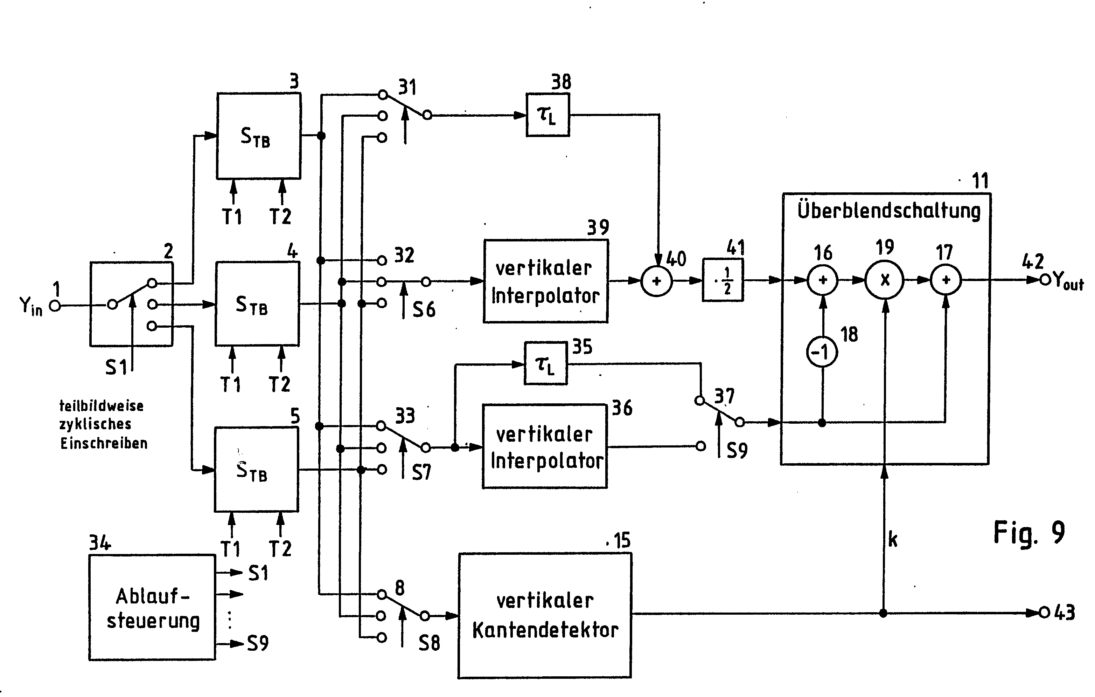

Die Schaltungsanordnung nach Fig. 9 enthält wie die Schaltungsanordnung nach Fig. 1 einen Umschalter 2, drei Teilbildspeicher 3, 4, 5, welche zum Einschreiben der Signale jeweils mit einem Takt T1 und zum Auslesen mit einem Takt T2 angesteuert werden, sowie einen über eine Multiplexerschaltung 8 an die Ausgänge der Teilbildspeicher 3, 4, 5 anschließbaren Kantendetektor 15, der eine Überblendschaltung 11 steuert.

Über weitere Multiplexerschaltungen 31, 32, 33 können die Ausgänge der Teilbildspeicher 3, 4, 5 mit Schaltungen zur Ableitung der Signale V1 und V2 verbunden werden. Die Multiplexerschaltungen werden mit Signalen S5, S6, S7 und S8 angesteuert, welche von einer Ablaufsteuerung 34 erzeugt werden.

Zur Ableitung des Videosignals V1 werden abwechselnd die Ausgangssignale einer Verzögerungsschaltung 35 und eines vertikalen Interpolators 36 über einen Umschalter 37 einem Eingang der Überblendschaltung 11 zugeführt. Der Umschalter 37 wird ebenfalls von der Ablaufsteuerung 34 mit Hilfe eines Signals S9 gesteuert. Dieses erfolgt derart, daß der Schalter 37 seine jeweilige Stellung während zweier aufeinanderfolgender Teilbilder der wiederzugebenden Videosignale beibehält. Gemäß Fig. 8, Zeile V1 werden Sig nale des Teilbildes A1 während der oberen Stellung des Schalters 37 vom Ausgang der Verzögerungsschaltung 35 dem Eingang der Überblendschaltung 11 zugeführt. Danach werden die Signale A1i und A2i beider darauffolgender Teilbilder dem vertikalen Interpolator 36 entnommen, wozu der Umschalter 37 sich in der unteren Stellung befindet. Die Signale A2 und B1 der folgenden beiden Teilbilder werden dann wieder der Verzögerungsschaltung 35 entnommen.

Die Signale für eine möglichst gute Wiedergabe der Kanten werden mit Hilfe einer weiteren Verzögerungsschaltung 38, eines weiteren vertikalen Interpolators 39, einer Addierschaltung 40 sowie einer Multiplizierschaltung 41 gewonnen. Dabei werden die Multiplexerschaltungen 31 und 32 derart gesteuert, daß an den Eingangen der weiteren Verzögerungsschaltung 38 und des weiteren vertikalen Interpolators 39 jeweils die Signale anstehen, welche zu einer Interpolation entsprechend Fig. 8, Zeile V2 benötigt werden.

Dem Ausgang 42 der Schaltungsanordnung nach Fig. 9 können die wiederzugebenden Signale entnommen und einer entsprechenden Wiedergabeanordnung zugeführt werden. An einem weiteren Ausgang 43 ist das Ausgangssignal des vertikalen Kantendetektors 15 entnehmbar und kann beispielsweise für die Steuerung einer Verarbeitungsschaltung für das Farbartsignal verwendet werden.

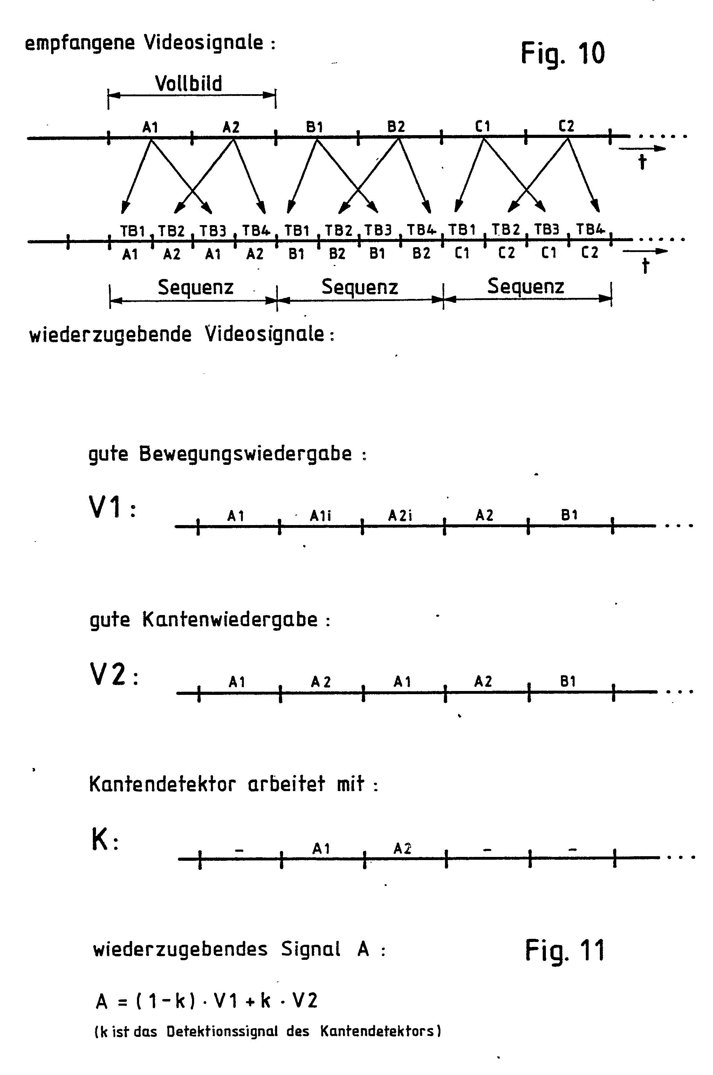

Bei dem in den Figuren 10 bis 12 dargestellten Ausführungsbeispiel wird zur Ableitung der Signale für eine gute Wiedergabe von Bewegungen ebenfalls das in Fig. 6 dargestellte Verfahren angewendet.

Die Ableitung der Signale für eine gute Wiedergabe der Kanten erfolgt jedoch nach einem anderen Verfahren, das in Fig. 10 dargestellt ist. Dabei wird das erste Teilbild TB1 der wiederzugebenden Videosignale aus dem ersten Teilbild A1 der empfangenen Videosignale, das zweite Teilbild TB2 aus dem zweiten Teilbild A2, das dritte Teilbild TB3 wiederum aus dem ersten Teilbild A1 und das vierte Teilbild TB4 aus dem zweiten Teilbild A2 gewonnen. Es wird also jeweils ein Vollbild der empfangenen Videosignale innerhalb der gleichen Zeit zweimal wiedergegeben. Fig. 11 zeigt eine Gegenüberstellung der Signale V1 und V2, welche gemäß den in den Figuren 6 und 10 dargestellten Verfahren gewonnen wurden.

Der Kantendetektor wird hier nur in den Teilbildern TB2 und TB3 wirksam, da in den Teilbildern TB1 und TB4 die Inhalte der Verfahren identisch sind.

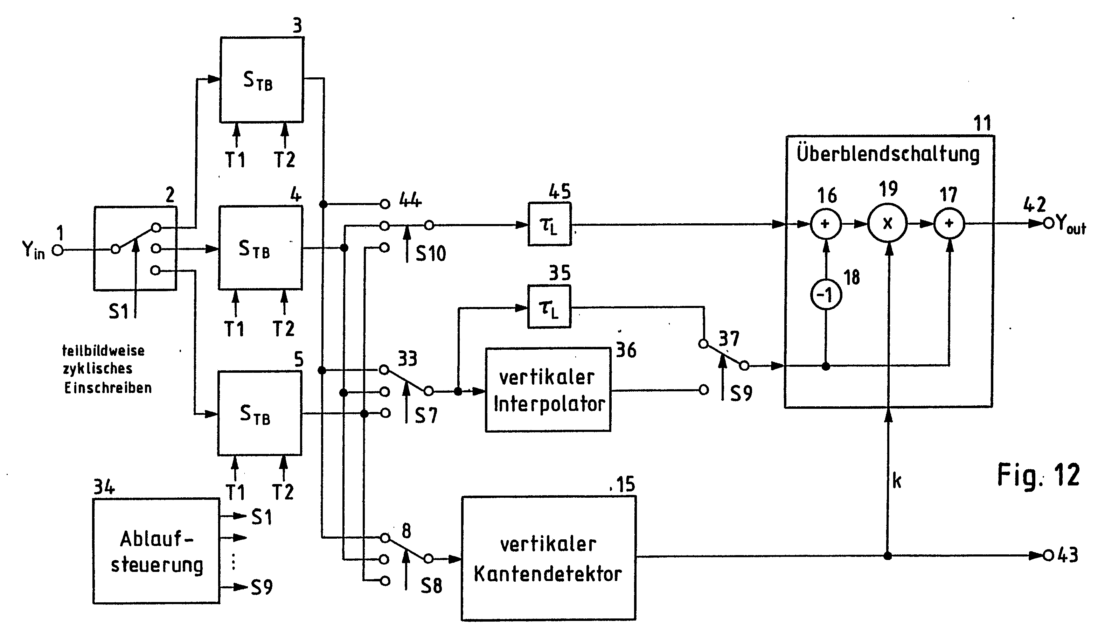

Die Schaltungsanordnung nach Fig. 12 weist wie die Schaltungsanordnungen nach den Figuren 5 und 9 einen Umschalter 2 und Teilbildspeicher 3, 4, 5 auf. Der über die Multiplexerschaltung 8 angeschlossene Kantendetektor 15 und die Überblendschaltung 11 sind ebenfalls bereits im Zusammenhang mit den anderen Figuren beschrieben. Da die Ableitung der Signale V2 für eine gute Wiedergabe der Kanten in gleicher Weise wie bei dem vorhergehend beschriebenen Ausführungsbeispiel erfolgt, ist bei Fig. 12 für diese Signale ebenfalls eine Multiplexerschaltung 33, eine Verzögerungsschaltung 35, ein vertikaler Interpolator 36 und ein Umschalter 37 vorgesehen, welche in gleicher Weise wie die entsprechenden Elemente der Schaltungsanordnung nach Fig. 9 arbeiten.

Das Videosignal V1 wird bei der Schaltungsanordnung nach Fig. 12 über eine Multiplexerschaltung 44 und eine Verzögerungsschaltung 45 der Überblendschaltung 11 zugeführt.

Fig. 13 zeigt ein Ausführungsbeispiel für einen Zeilenkompressor, bei welchem eine gute Ausnutzung des Speicherplatzes bei einer möglichst geringen Verarbeitungsgeschwindigkeit erfolgt. Dabei sind vier Schreib-Lese-Speicher (RAM) 51, 52, 53, 54 vorgesehen, wobei jeweils zwei Schreib-Lese-Speicher von einem Adressenzähler 55 bzw. 56 angesteuert werden. Die Adressenzähler 55, 56 erzeugen jeweils neun Stellen der Adresse, während eine zehnte Stelle A9 wie in den Zeitdiagrammen nach Fig. 13a) und 13b) dargestellt ist, zugeführt wird. Die Signale zweier Zeilen, Zei(a) und Zei(b) werden Eingängen 57, 58 des Zeilenkompressors zugeführt und über einen Eingangsumschalter 59, der mit einem Takt T2 gesteuert wird, auf die Schreibeingänge der Schreib-Lese-Speicher 51 bis 54 verteilt.

Die Ausgange der Schreib-Lese-Speicher 51 bis 54 sind über zwei ausgangsseitige Umschalter 60, 61 mit dem Ausgang 62 verbindbar.

Während die Schreib-Lese-Speicher 51 und 52 beschrieben werden, werden die Schreib-Lese-Speicher 53 und 54 gelesen. Die Schreib-Lese-Speicher 51 und 52 werden alternierend mit den Daten aus den Zeilen (a) und (b) beschrieben. Dabei liegt an den Adresseneingängen A9 ein zum Takt T2 komplementäres Signal. Dadurch wird erreicht, daß die Zeile (a) aufwärts zählend ab Adresse 1 beginnt, die Zeile (b) dagegen ab Adresse 512. Beim Lesen werden zunächst die Spei cheradressen A9 auf 0 gelegt. An die Speicherausgänge gelangen nun immer zwei Daten (bzw. Datenworte) der Zeile (a). Die als Ausgangsmultiplexer dienenden Umschalter 60, 61 bewirken, daß die Daten in der richtigen Reihenfolge mit der doppelten Geschwindigkeit an den Ausgang gelangen. Nach der Zeile (a) wird durch Umschalten der Adressen A9 auf den Wert 1 die Zeile (b) gelesen.

Der Vorteil der dargestellten Schaltung liegt darin, daß die Speicher immer mit der gleichen maximalen Datenrate arbeiten und zeitlich optimal ausgenutzt werden. Eine Verdopplung der Datenrate innerhalb der Speicher, wie es vereinfachend im Zusammenhang mit Fig. 5 angedeutet ist, würde den Aufwand erheblich vergrößern, die maximale Geschwindigkeit käme aber nur beim Lesen zur Geltung.

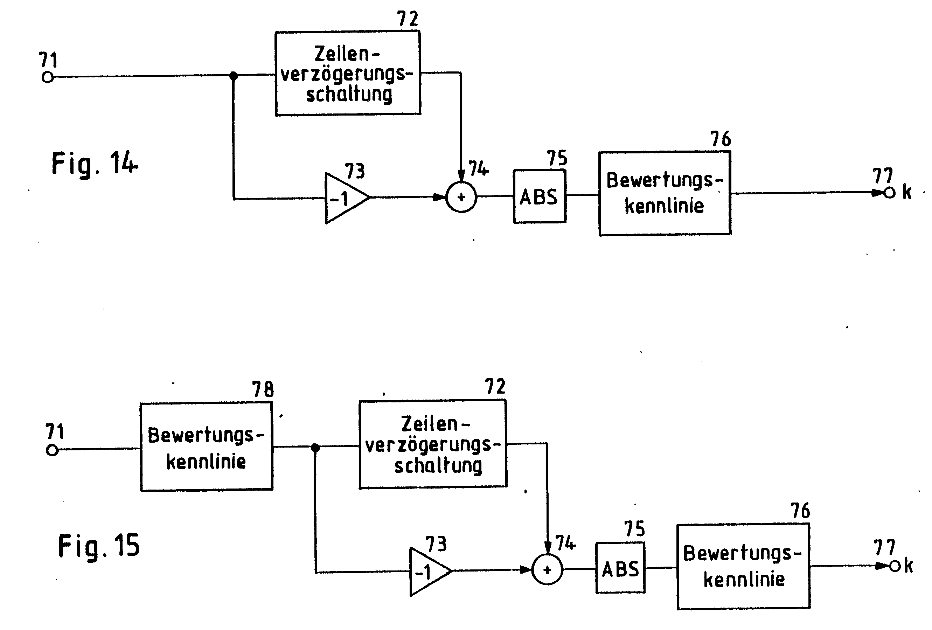

Bei den in den Figuren 14 und 15 dargestellten Ausführungsbeispielen für Kantendetektoren werden von einem Eingang 71 die Videosignale einerseits über eine Zeilenverzögerungsschaltung 72 und andererseits über eine Invertierschaltung 73 je einem Eingang einer Addierschaltung 74 zugeführt, so daß am Ausgang die Differenz der verzögerten und der unverzögerten Signale ansteht. Je nach Verwendungszweck im einzelnen weist die Verzögerungsschaltung 72 die Dauer einer oder gegebenenfalls auch mehrerer Zeilen auf. Bei einer Verzögerungszeit von einer Zeilendauer werden Amplitudendifferenzen zweier aufeinanderfolgender Zeilen als Kante erkannt. Über eine Schaltung 75 zur Bildung des Absolutwertes und eine nichtlineare Schaltung 76 gelangt das Differenzsignal zum Ausgang 77 und kann als Signal k der Überblendschaltung 11 (Figuren 5, 9, 12) zugeleitet werden.

Die Bewertungskennlinie der nichtlinearen Schaltung 76 hängt von den Erfordernissen im einzelnen ab. So kann es beispielsweise vorteilhaft sein, kleinere Differenzsignale geringer als größere Differenzsignale zu bewerten.

Gegenüber dem Ausführungsbeispiel nach Fig. 14 weist die Schaltung nach Fig. 15 eine weitere nichtlineare Schaltung 78 auf, welche die Eingangssignale bereits einer Bewertung unterwirft.

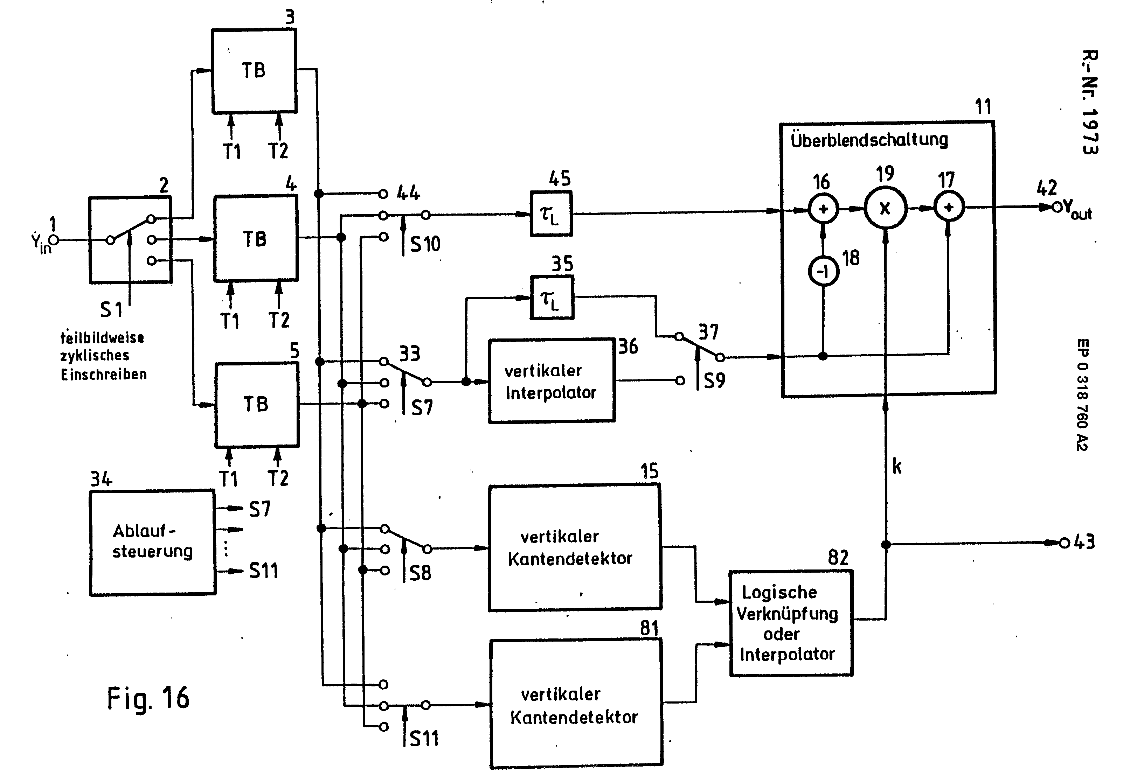

Das in Fig. 16 dargestellte Ausführungsbeispiel unterscheidet sich von dem in Fig. 9 dargestellten dadurch, daß zusätzlich zu dem Kantendetektor 15 ein weiterer Kantendetektor 81 vorgesehen ist. Die Ausgangssignale beider Kantendetektoren werden über eine Schaltung 82 der Überblendschaltung zugeführt. Durch den weiteren Kantendetektor 81 wird für bestimmte Bildinhalte die Erkennung von Kanten verbessert. Dieses wird im folgenden anhand eines Bildinhalts, der eine horizontale Linie darstellt, erläutert. Dabei sei angenommen, daß die horizontale Linie so schmal ist, daß sie lediglich von einer Zeile erfaßt wird. Ein an sich für die Durchführung des erfindungsgemäßen Verfahrens vorgesehener Kantendetektor (siehe Fig. 14 oder 15) wertet zwei zeitlich aufeinander folgende Zeilen eines Teilbildes aus. Ist jedoch die angenommene horizontale Linie in diesem Teilbild nicht, sondern im folgenden bzw. vorausgegangenen Teilbild erfaßt worden, so spricht der Kantendetektor nicht an.

Um jedoch auch derartige Bildinhalte möglichst störungsfrei wiederzugeben, werden dem weiteren Kantendetektor 81 Signale des benachbarten Teilbildes über einen weiteren Multiplexer, der mit einem Signal S11 angesteuert wird, derart zugeführt, daß der weitere Kantendetektor ein Kantensignal abgibt, wenn der Inhalt zweier benachbarter Zeilen verschieden ist.

Je nachdem ob die Kantendetektoren 15, 81 zweistufige oder mehrstufige Ausgangssignale abgeben, kann in der Schaltung 82 eine logische Verknüpfung oder eine Interpolation verwendet werden. Dabei erfolgt die logische Verknüpfung vorzugsweise mit einer Oder-Schaltung.

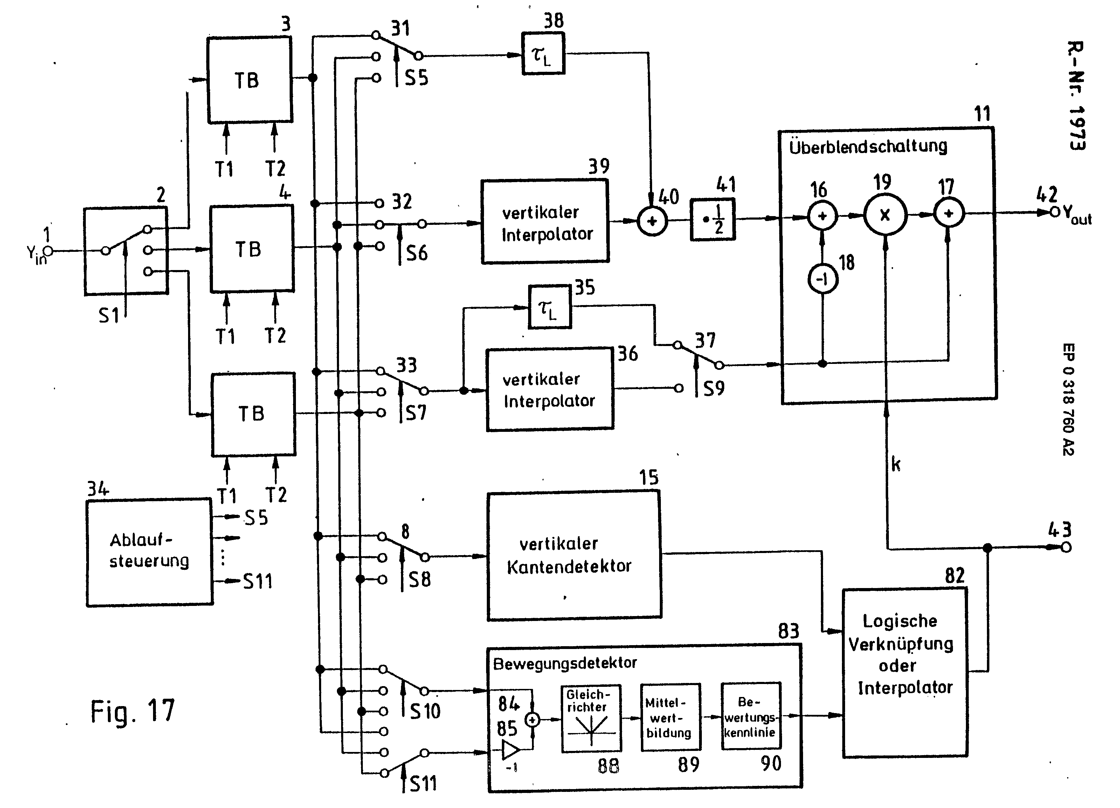

Bei dem Ausführungsbeispiel nach Fig. 17 ist zusätzlich zu dem Kantendetektor 15 ein Bewegungsdetektor 83 vorgesehen. Mit Hilfe einer Addierschaltung 84 und einer Invertierschaltung 85 wird aus den dem Bewegungsdetektor 83 zugeführten Signalen die Differenz gebildet. Die Signale werden über zwei Multiplexerschaltungen zugeführt, die mit Hilfe der Steuersignale S10 und S11 gesteuert werden. Das Ausgangssignal der Addierschaltung 84 wird einem Gleichrichter 88 mit symmetrischer Kennlinie zugeführt, so daß am Ausgang des Gleichrichters der Absolutwert der Differenz zwischen den dem Bewegungsdetektor 83 zugeführten Signalen ansteht. Hieraus wird in einer weiteren Schaltung 89 der Mittelwert gebildet, welcher in einer Schaltung 90 einer Bewertungskennlinie unterworfen ist.

Am Ausgang des Bewegungsdetektors 83 steht ein Signal an, welches Unterschiede zwischen aufeinanderfolgenden Vollbildern, also Bewegung kennzeichnet. Dieses kann - ebenso wie das Ausgangssignal des Kantendetektors 15 - ein mehrstufiges Signal sein, dessen Amplitude mit zunehmender Bewegung ansteigt, oder auch ein zweistufiges Signal, das von einem bestimmten Bewegungsumfang an seinen Wert schlagartig ändert. In entsprechender Weise kann in der Schaltung 82 entweder eine logische Verknüpfung oder ein Interpolator vorgesehen sein. Das Ausgangssignal der Schaltung 82 wird dem Steuereingang der Überblendschaltung 11 zugeführt.

Die logische Verknüpfung bzw. Interpolation ist derart ausgeführt, daß die Umwandlung der empfangenen Videosignale nur dann nach dem zweiten Verfahren, welches die Wiedergabe von Kanten bevorzugt, erfolgt, wenn bei Vorliegen von im wesentlichen horizontal verlaufenden Kanten der Bewegungsdetektor 83 keine Bewegung anzeigt.

**Ansprüche**

1. Fernsehempfänger mit einer Einrichtung zur Unterdrückung von Flimmerstörungen im wiedergegebenen Fernsehbild, wobei die Vertikalfrequenz bei der Wiedergabe gegenüber der Vertikalfrequenz bei der Übertragung erhöht ist,
dadurch gekennzeichnet,
daß eine Umwandlung von übertragenen Videosignalen in wiederzugebende Videosignale mit erhöhter Vertikalfrequenz in Abhängigkeit vom Vorliegen von im wesentlichen horizontal verlaufenden Kanten nach einem ersten oder nach einem zweiten Verfahren erfolgt,
daß das erste Verfahren die Wiedergabe von Bewegungen bevorzugt und
daß das zweite Verfahren die Wiedergabe von horizontal verlaufenden Kanten bevorzugt,
daß die wiederzugebenden Videosignale ein fortlaufendes Raster ohne Zeilensprung bilden,
daß die erhöhte Vertikalfrequenz doppelt so hoch wie die Vertikalfrequenz der übertragenen Videosignale ist
und daß ein Kantendetektor für im wesentlichen horizontal verlaufende Linien vorgesehen ist, welchem die Videosignale mit erhöhter Vertikalfrequenz zugeführt werden, wobei jeweils der Inhalt eines übertragenen Teilbildes wiederholt wird.

2. Fernsehempfänger nach Anspruch 1,
dadurch gekennzeichnet,
daß drei Teilbildspeicher (3, 4, 5) vorgesehen sind, in welche jeweils ein Teilbild der übertragenen Videosignale in zyklischer Folge mit einer ersten Taktfrequenz einschreibbar ist und aus welchen die gespeicherten Videosignale mit einer zweiten Taktfrequenz auslesbar sind, welche doppelt so hoch wie die erste Taktfrequenz ist,
daß an Ausgänge der Teilbildspeicher (3, 4, 5) drei parallelgeschaltete, jedoch phasenverschoben angesteuerte Multiplexerschaltungen (6, 7, 8) angeschlossen sind und
daß ein Ausgang der ersten Multiplexerschaltung (8) mit dem Eingang eines vertikalen Kantendetektors (15) verbunden ist, dessen Ausgang an einen Steuereingang einer Überblendschaltung (11) angeschlossen ist.

3. Fernsehempfänger nach Anspruch 2,
dadurch gekennzeichnet,
daß mehrere, vorzugsweise zwei, Kantendetektoren (15, 81) für im wesentlichen horizontal verlaufende Kanten vorgesehen sind, deren Ausgangssignale miteinander kombiniert einem Steuereingang einer Überblendschaltung (11) zuführbar sind.

4. Fernsehempfänger nach Anspruch 3,
dadurch gekennzeichnet,
daß die Ausgangssignale des ersten und des zweiten Kantendetektors (15, 81) über eine Oder-Schaltung (82) dem Steuereingang der Überblendschaltung zuführbar sind.

R.-Nr. 1973

empfangene Videosignale :

| A1 | A2 | B1 | B2 | ... |

Vollbild

Fig. 1

wiederzugebende Videosignale :

| VB1 | VB2 | VB3 | VB4 | VB1 | VB2 | VB3 | VB4 | ... |

Sequenz    Sequenz

empfangene Videosignale :    wiederzugebende Videosignale :

Zeile    A1    A1i    A1+A1i

1
2
3
4
5
6
7
8
9

Fig. 2

empfangene Videosignale :    wiederzugebende Videosignale :

Zeile    A1    A2    A1+A2

1
2
3
4
5
6
7
8
9

Fig. 3

gute Bewegungswiedergabe :

$V1$ :

| A1 + A1i | A1 + A1i | A2 + A2i | A2 + A2i | B1 + B1i | . . . |
|:---:|:---:|:---:|:---:|:---:|:---:|
| VB 1 | VB 2 | VB 3 | VB 4 | | |

gute Kantenwiedergabe :

$V2$ :

| Z2 + A1 | A1 + A2 | A1 + A2 | A2 + B1 | A2 + B1 | . . . |
|:---:|:---:|:---:|:---:|:---:|:---:|
| VB1 | VB2 | VB3 | VB4 | | |

Kantendetektor arbeitet mit :

$K$ :

| A1 / A2 | A1 / A2 | A2 | A2 | B1 | . . . |
|:---:|:---:|:---:|:---:|:---:|:---:|

wiederzugebendes Signal A :       Fig. 4

$$A = (1-k) \cdot V1 + k \cdot V2$$

(k ist das Detektionssignal des Kantendetektors)

Fig. 5

R.-Nr. 1973

empfangene Videosignale :

**Fig. 6**

wiederzugebende Videosignale :

empfangene Videosignale :

**Fig. 7**

wiederzugebende Videosignale :

gute Bewegungswiedergabe :

$$V1:$$

gute Kantenwiedergabe :

$$V2:$$

Kantendetektor arbeitet mit :

$$K:$$

wiederzugebendes Signal A :

$$A = (1-k) \cdot V1 + k \cdot V2$$

(k ist das Detektionssignal des Kantendetektors)

**Fig. 8**

Fig. 9

empfangene Videosignale :

**Fig. 10**

Vollbild

A1     A2     B1     B2     C1     C2     ....

t

TB1 TB2 TB3 TB4 TB1 TB2 TB3 TB4 TB1 TB2 TB3 TB4   ....

A1   A2   A1   A2   B1   B2   B1   B2   C1   C2   C1   C2

t

Sequenz      Sequenz      Sequenz

wiederzugebende Videosignale :

gute Bewegungswiedergabe :

**V1 :**

A1    A1i    A2i    A2    B1     ...

gute Kantenwiedergabe :

**V2 :**

A1    A2    A1    A2    B1     ...

Kantendetektor arbeitet mit :

**K :**

  —    A1    A2    —    —     ...

wiederzugebendes Signal A :

**Fig. 11**

$A = (1-k) \cdot V1 + k \cdot V2$

(k ist das Detektionssignal des Kantendetektors)

R.-Nr. 1973

Fig. 12

EP 0 318 760 A2

R.-Nr.1973

Fig. 13

**Fig. 13a)** T2

SCHREIBEN:

RAM 1: A9

| Adresse | 0 | 512 | 1 | 513 | 2 | 514 | 3 | 515 | 4 | 516 | 5 | 517 |
|---------|---|-----|---|-----|---|-----|---|-----|---|-----|---|-----|
| Datum | a1 | b2 | a3 | b4 | a5 | b6 | a7 | b8 | a9 | b10 | a11 | b12 |

RAM 2: A9

| Adresse | 512 | 0 | 513 | 1 | 514 | 2 | 515 | 3 | 516 | 4 | 517 | 5 |
|---------|-----|---|-----|---|-----|---|-----|---|-----|---|-----|---|
| Datum | b1 | a2 | b3 | a4 | b5 | a6 | b7 | a8 | b9 | a10 | b11 | a12 |

LESEN:

RAM 3: A9

| Adresse | 0 | 1 | 2 | 3 | 4 | . . . | 512 | 513 | 514 | 515 | 516 |
|---------|---|---|---|---|---|-------|-----|-----|-----|-----|-----|
| Datum | a1 | a3 | a5 | a7 | a9 | . . . | b2 | b4 | b6 | b8 | b10 |

RAM 4: A9

| Adresse | 0 | 1 | 2 | 3 | 4 | . . . | 512 | 513 | 514 | 515 | 516 |
|---------|---|---|---|---|---|-------|-----|-----|-----|-----|-----|
| Datum | a2 | a4 | a6 | a8 | a10 | . . . | b1 | b3 | b5 | b7 | b9 |

Fig. 13 b)

Fig. 14

```
        ┌─────────────────┐ 72
        │  Zeilen-        │
71      │  verzögerungs-  │
○───┬───│  schaltung      │
    │   └─────────────────┘
    │              │
    │      73      │  74      75       ┌──────────────┐ 76
    │    ┌──┐      ↓ ┌───┐  ┌─────┐    │ Bewertungs-  │      77
    └────│-1│─────→(+)│ABS│──│kennlinie │─────────○k
         └──┘        └───┘  └─────┘    └──────────────┘
```

Fig. 15

```
        ┌──────────────┐ 78      ┌─────────────────┐ 72
71      │ Bewertungs-  │         │  Zeilen-        │
○───────│ kennlinie    │────┬────│  verzögerungs-  │
        └──────────────┘    │    │  schaltung      │
                            │    └─────────────────┘
                            │              │
                            │      73      │  74      75       ┌──────────────┐ 76
                            │    ┌──┐      ↓ ┌───┐  ┌─────┐    │ Bewertungs-  │      77
                            └────│-1│─────→(+)│ABS│──│ kennlinie │────○k
                                 └──┘        └───┘  └─────┘    └──────────────┘
```

Fig. 16

teilbildweise
zyklisches
Einschreiben

R.-Nr. 1973

EP 0 318 760 A2

Fig. 17